# EUROPEAN PATENT APPLICATION

(11) **EP 4 826 060 A1**
(43) Date of publication of application: **21.10.2026**
(21) Application number: 24904288.8
(22) Date of filing: 13.12.2024
(51) Int. Cl.: C22C 38/04, C22C 38/06, C22C 38/12, C22C 38/02, C22C 38/00, C22C 38/50, C22C 38/42, C22C 38/44, C25D 5/12, C25D 3/12

(54) **NICKEL PLATED STEEL SHEET FOR CANS AND MANUFACTURING METHOD THEREFOR**

(30) Priority: 15.12.2023 KR 20230182693
(71) Applicant: POSCO Co., Ltd, Gyeongsangbuk-do 37859 (KR)
(72) Inventor: JO, Minho, Pohang-si, Gyeongsangbuk-do 37859 (KR); JEON, Jeachun, Pohang-si, Gyeongsangbuk-do 37859 (KR)
(74) Representative: Meissner Bolte Partnerschaft mbB
(86) International application number: PCT/KR2024/020327
(87) International publication number: WO 2025/127723

(57) **Abstract**

A Ni plated steel sheet for cans according to an embodiment of the present invention comprises a base steel sheet, a Ni plating layer located on one or both surfaces of the base steel sheet, and an Fe-Ni alloy layer located between the base steel sheet and the Ni plating layer, wherein the base steel sheet comprises, by weight %, C: 0.02 to 0.07%, Mn: 0.1 to 0.4%, Al: 0.01 to 0.06%, and Nb: 0.01 to 0.04%, with the balance being Fe and other inevitable impurities, wherein an ASTM grain size number is 11.3 or more, wherein a tensile strength is 420 MPa or more, wherein an elongation is 20% or more, wherein an in-plane anisotropy Δr is 0.4 or less, and wherein a thickness of the Fe-Ni alloy layer is 0.5 to 2.5 µm.

## Description

### [Technical Field]

An embodiment of the present invention relates to a nickel plated steel sheet for cans and a method for manufacturing the same. Specifically, an embodiment of the present invention relates to a nickel plated steel sheet having excellent strength and formability, which is used for a cylindrical battery case for electric vehicles and the like, and a method for manufacturing the same.

### [Background Art]

In the case of cylindrical battery cans used for cylindrical battery cases, it is common to use steel sheets by performing nickel (Ni) plating or the like to withstand corrosion caused by electrolytes contained in the batteries. Recently, as the demand for electric vehicles increases, the demand for materials for cylindrical battery cases for electric vehicles is significantly increasing.

Meanwhile, in order to ensure battery safety, demands for strength among the properties of battery can materials are increasing. Electric vehicle batteries may generate a large amount of gas due to abnormal chemical reactions occurring inside because of various causes such as overcurrent during driving and external impact. The generated gas increases the internal pressure and may even cause a chain explosion of the battery, so the battery can material is required to have high strength to increase the internal pressure resistance of the battery. Furthermore, when high-strength materials are used, battery performance may be further improved by reducing the thickness of the battery can and expanding the internal space. Battery cans are manufactured through mechanical processing in which the thickness is reduced by 30% or more, and even among materials having the same yield strength, a material having a high tensile strength has a high work hardening rate and may have higher durability after processing. Therefore, materials for battery cans are particularly required to have high tensile strength to obtain high strength after forming.

Materials for battery cans are also required to have mechanical properties in terms of formability. Since cylindrical battery cans undergo processing steps such as drawing and ironing during forming, at least a certain level of elongation is required in addition to strength. In addition, in order to minimize the occurrence of earing when forming into a cylindrical shape, the smaller the in-plane anisotropy Δr is, the more advantageous it is. If the in-plane anisotropy is large, not only does the earing portion that must be cut and removed after processing become larger, but also thickness variations occur in each part, making it difficult to fully utilize the internal space. In addition to mechanical properties, the microstructure also affects formability; the smaller the grain size, the more excellent the processed shape that may be obtained through uniform deformation. When the grains are coarse, non-uniform deformation may cause not only shape distortion but also an orange peel phenomenon in which the surface becomes uneven.

Cylindrical battery cases are generally subjected to Ni plating to prevent corrosion due to an internal electrolyte or the atmosphere during processing, and there are required characteristics for the plating layer. Ni plating is performed on portions that come into contact with a processing die, and in order to prevent detachment of the plating layer during processing, adhesion is improved through heat treatment that forms an Fe-Ni alloy layer at an interface through diffusion between Fe of a steel sheet and Ni of the plating layer. If a thickness of the alloy layer is too thin, it is difficult to ensure adhesion between the steel sheet and the plating layer, and if the thickness is too thick, Fe components may be exposed to a surface of the plating layer and rust may occur due to Fe oxidation; therefore, it is necessary to form an alloy layer of an appropriate thickness.

To manufacture a high-strength steel sheet for cans, a method of performing secondary rolling with a high reduction ratio on low-carbon steel has been proposed. Since the secondary reduction is performed after recrystallization annealing, the advantage of significantly improved strength through work hardening may be obtained. However, when such a high level of secondary reduction is applied, the elongation significantly decreases, which is a disadvantage in that it is difficult to ensure can formability.

In addition, to ensure strength and formability, a method of utilizing bake hardening by adding appropriate amounts of P and Nb to ultra-low carbon steel is known. However, since it is an ultra-low carbon steel, even though the C content is low, there is a disadvantage that the contents of C and Nb must be simultaneously and very strictly controlled so that some C remains in solid solution without precipitating as NbC so that bake hardening may occur.

In addition, a method has been proposed that may improve strength through solid solution strengthening by adding a large amount of N to low-carbon steel and increase elongation by applying a relatively small secondary reduction ratio. However, when a large amount of N, which is an interstitial element, is added, compositional deviation may easily occur, and when compositional deviation occurs, there is a high possibility that material property variation will also occur. Therefore, there is a disadvantage that additional effort is required in the steelmaking process to control the compositional deviation at a low level.

In addition, a method is known in which strength is increased using precipitation strengthening through Ti addition, and the decrease in elongation due to work hardening is minimized by additionally applying a lower secondary reduction ratio to ensure a balance between strength and ductility. However, the addition of Ti has a characteristic of degrading cleanliness by forming numerous inclusions during the steelmaking process due to high oxygen affinity. If a large number of inclusions are present in the steel, they may become initiation sites for cracks during a forming process, which presents a disadvantage that additional effort is required to remove the inclusions.

### [Disclosure]

### [Technical Problem]

An embodiment of the present invention provides a nickel plated steel sheet for cans and a method for manufacturing the same. Specifically, an embodiment of the present invention provides a nickel plated steel sheet having excellent strength and formability, which is used for cylindrical battery cases for electric vehicles and the like, and a method for manufacturing the same.

### [Technical Solution]

A Ni plated steel sheet for cans according to an embodiment of the present invention comprises a base steel sheet, a Ni plating layer located on one or both surfaces of the base steel sheet, and an Fe-Ni alloy layer located between the base steel sheet and the Ni plating layer, wherein the base steel sheet comprises, by weight %, C: 0.02 to 0.07%, Mn: 0.1 to 0.4%, Al: 0.01 to 0.06%, and Nb: 0.01 to 0.04%, with the balance being Fe and other inevitable impurities, wherein an ASTM grain size number is 11.3 or more, wherein a tensile strength is 420 MPa or more, wherein an elongation is 20% or more, wherein an in-plane anisotropy Δr is 0.4 or less, and wherein a thickness of the Fe-Ni alloy layer is 0.5 to 2.5 µm.

The base steel sheet may further comprise at least one of Si: 0.05 wt% or less, P: 0.015 wt% or less, S: 0.015 wt% or less, and N: 0.006 wt% or less.

The base steel sheet may further comprise at least one of Ti: 0.01 wt% or less, Ni: 0.1 wt% or less, Cr: 0.1 wt% or less, Cu: 0.1 wt% or less, Mo: 0.01 wt% or less, and V: 0.01 wt% or less.

The base steel sheet may include NbC precipitates, and the average particle diameter of the NbC precipitates may be 10 nm or less.

A method for manufacturing a Ni plated steel sheet for cans according to an embodiment of the present invention comprises: manufacturing a hot-rolled steel sheet by hot rolling a slab comprising, by weight %, C: 0.02 to 0.07%, Mn: 0.1 to 0.4%, Al: 0.01 to 0.06%, and Nb: 0.01 to 0.04%, the balance being Fe and other inevitable impurities; manufacturing a cold-rolled steel sheet by cold rolling the hot-rolled steel sheet at a reduction ratio of 70 to 90%; recrystallization annealing the cold-rolled steel sheet at a soaking temperature of 720 to 850°C; skin-pass rolling the recrystallization annealed steel sheet at a reduction ratio of 0.5 to 1.8%; manufacturing a Ni plated steel sheet by Ni plating one or both surfaces of the skin-pass rolled steel sheet; and alloying annealing the Ni plated steel sheet by maintaining the Ni plated steel sheet at a soaking temperature of 600 to 740°C for 5 to 60 seconds.

The slab may further comprise at least one of Si: 0.05 wt% or less, P: 0.015 wt% or less, S: 0.015 wt% or less, and N: 0.006 wt% or less.

The slab may further comprise at least one of Ti: 0.01 wt% or less, Ni: 0.1 wt% or less, Cr: 0.1 wt% or less, Cu: 0.1 wt% or less, Mo: 0.01 wt% or less, and V: 0.01 wt% or less.

Before manufacturing the hot-rolled steel sheet, heating the slab at 1200°C or higher may be further included.

In the manufacturing of the hot-rolled steel sheet, after hot finish rolling at Ar₃ or higher, coiling may be performed at a temperature of 580 to 720°C.

### [Advantageous Effects]

The Ni plated steel sheet for cans according to an embodiment of the present invention has excellent durability and formability and may be useful for a cylindrical battery case.

### [Brief Description of the Drawings]

Fig. 1 is a schematic cross-section of a Ni plated steel sheet for cans according to an embodiment of the present invention.

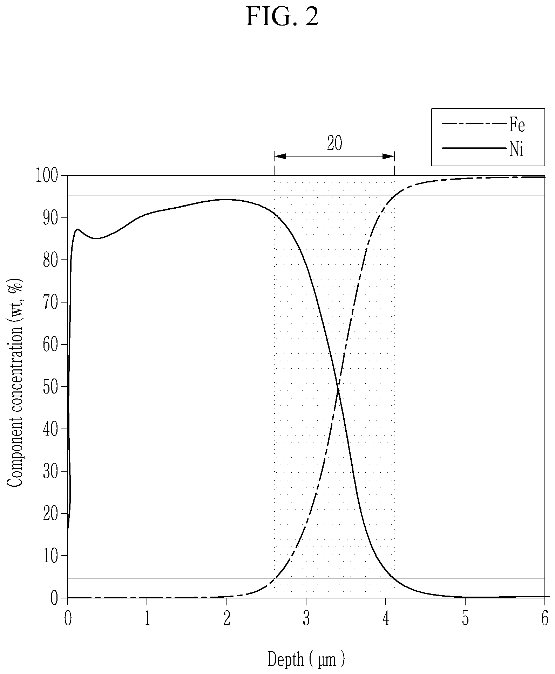

Fig. 2 shows the GDS analysis results of the Ni-plated steel sheet manufactured in Example 4.

### [Mode for Invention]

The terms 'first', 'second', and 'third' are used to describe various parts, components, regions, layers, and/or sections, but are not limited thereto. These terms are used only to distinguish one part, component, region, layer, or section from another part, component, region, layer, or section. Therefore, a first part, component, region, layer, or section described below may be referred to as a second part, component, region, layer, or section without departing from the scope of the present invention.

The terminology used herein is for the purpose of describing particular embodiments only and is not intended to be limiting of the invention. As used herein, the singular forms are intended to include the plural forms as well, unless the context clearly indicates otherwise. The meaning of "comprising" used in the specification specifies the presence of stated features, regions, integers, steps, operations, elements, and/or components, and does not preclude the presence or addition of other features, regions, integers, steps, operations, elements, and/or components.

In addition, unless otherwise specified, % refers to percent by weight, and 1 ppm is 0.0001 percent by weight.

In one embodiment of the present invention, the phrase 'further including an additional element' means that the additional element is included by replacing the iron (Fe), which is the balance, in an amount corresponding to the added amount of the additional element.

Unless otherwise defined, all terms including technical and scientific terms used herein have the same meaning as commonly understood by one of ordinary skill in the art to which the present invention belongs. Terms defined in commonly used dictionaries are further interpreted as having meanings consistent with the related technical literature and the present disclosure, and are not to be interpreted in an idealized or overly formal sense unless specifically defined herein.

Hereinafter, embodiments of the present invention will be described in detail so that those of ordinary skill in the art to which the present invention belongs may easily implement them. However, the present invention may be implemented in many different forms and is not limited to the embodiments described herein.

An embodiment of the present invention relates to a Ni plated steel sheet used for electric vehicle battery cases and the like after can forming, and a material for such use is required to have strength of an appropriate level or higher for improving internal pressure resistance of batteries. To ensure formability, an elongation of an appropriate level or higher is required, and in order to obtain a proper shape, in-plane anisotropy and grain size of an appropriate level or lower are required. In addition, for the Ni plated layer, corrosion resistance to prevent corrosion and adhesion to prevent peeling during processing must be ensured at a certain level or higher.

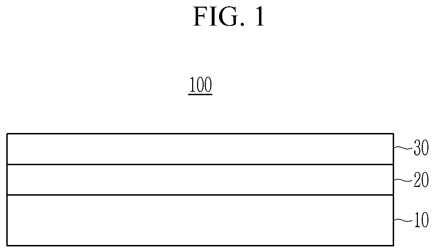

Fig. 1 schematically illustrates a cross-section of a Ni plated steel sheet 100 for cans according to an embodiment of the present invention. As shown in Fig. 1, the Ni plated steel sheet 100 for cans comprises a base steel sheet 10, a Ni plating layer 30 located on one or both surfaces of the base steel sheet 10, and an Fe-Ni alloy layer 20 located between the base steel sheet 10 and the Ni plating layer 30. In Fig. 1, the Fe-Ni alloy layer 20 and the Ni plating layer 30 are shown as being located on one surface of the base steel sheet 10, but the Fe-Ni alloy layer 20 and the Ni plating layer 30 may also be located on both surfaces of the base steel sheet 10.

The base steel sheet 10 of the Ni-plated steel sheet 100 for cans according to an embodiment of the present invention comprises, in weight %, C: 0.02 to 0.07%, Mn: 0.1 to 0.4%, Al: 0.01 to 0.06%, and Nb: 0.01 to 0.04%, and includes the balance of Fe and other inevitable impurities.

Hereinafter, each component will be described in detail.

### Carbon (C): 0.020 to 0.070 weight %

C is an element added to improve the strength of a steel sheet, and if the content thereof is low, the resulting strength is low, which may make it difficult to use the steel sheet as a structural material. Also, if the content is too low, productivity may decrease because the load on the steelmaking process increases. Conversely, if the C content is higher than necessary, formability may be degraded due to a decrease in elongation. More specifically, C may be included in an amount of 0.023 to 0.060 wt %.

In an embodiment of the present invention, a portion of the C combines with a small amount of added Nb to exist in the form of fine NbC precipitates, and the fine NbC may contribute to effective strength improvement by preventing grains from growing excessively.

### Manganese (Mn): 0.10 to 0.40 weight %

Mn is an element that prevents hot shortness due to S in solid solution by combining with S in solid solution in the steel to precipitate as MnS. In addition, it also has the effect of increasing the strength of the steel together with C by being dissolved in the steel. However, the strength improvement effect is lower than that of Nb, and if the Mn content is excessive, the formability of the steel may be degraded. More specifically, Mn may be included in an amount of 0.15 to 0.35 wt %.

### Aluminum (Al): 0.010 to 0.060 weight %

Al is an element having a strong deoxidizing effect and prevents the formability from being degraded by solute N by reacting with N in the steel to precipitate AlN. However, if Al is added in a large amount, the effect of additional addition may be saturated. More specifically, Al may be included in an amount of 0.015 to 0.055% by weight.

### Niobium (Nb): 0.0100 to 0.0400 weight %

Nb may combine with C to precipitate in the form of stable and fine NbC. Fine NbC precipitates contribute to strength improvement by suppressing grain growth. If the Nb content is too low, it is difficult to expect a sufficient strength increase effect by NbC. If an excessive amount of Nb is added, deformation resistance may be significantly increased during hot rolling, thereby hindering hot rollability. More specifically, Nb may be included in an amount of 0.0150 to 0.0350 wt %.

The base steel sheet 10 may further include at least one of Si: 0.05 wt% or less, P: 0.015 wt% or less, S: 0.015 wt% or less, and N: 0.006 wt% or less.

### Silicon (Si): 0.050 weight % or less

Si is an element that may be used as a decarburizing agent and is difficult to completely exclude because it may contribute to the improvement of strength by solid solution strengthening. However, if the Si content is excessive, Si-based oxides are formed on the surface during annealing, which may cause defects during plating and may degrade platability. Therefore, in consideration of this, Si may be included in an amount of 0.05 wt % or less. More specifically, Si may be included in an amount of 0.001 to 0.050 wt %. More specifically, Si may be included in an amount of 0.005 to 0.035 wt %.

### Phosphorus (P): 0.015 weight % or less

Phosphorus (P) is an element that, when added in an amount below a certain level, may increase strength without significantly reducing the ductility of steel; however, if P is added excessively, it segregates at grain boundaries to excessively harden the steel, and the elongation may decrease. Therefore, P may be further included in an amount of 0.015 wt % or less. More specifically, 0.001 to 0.015 wt % of P may be further included. More specifically, 0.003 to 0.013 wt % of P may be further included.

### Sulfur (S): 0.015 weight % or less

Since S is an element that causes hot shortness during hot rolling when existing in a solid solution state, precipitation of MnS should be induced through the addition of Mn. Since a corresponding level of Mn should be additionally added as the content of S increases, it is not desirable for a large amount of S to be present. Therefore, the upper limit of S may be limited to 0.015 wt % or less. More specifically, S may be further included in an amount of 0.001 to 0.015 wt %. More specifically, S may be further included in an amount of 0.003 to 0.013 wt %.

### Nitrogen (N): 0.0060 weight % or less

N is contained as an element whose residual presence in steel is inevitable, but N existing in a solid solution state causes aging and significantly degrades formability. In order to minimize ductility reduction due to the occurrence of an unnecessary level of aging, the upper limit may be limited to 0.006 wt %. More specifically, 0.0001 to 0.0060 wt % may be further included. More specifically, 0.0005 to 0.0055 wt % may be further included.

The balance, other than the aforementioned alloy composition, includes Fe and inevitable impurities. However, in an embodiment of the present invention, the addition of other elements is not excluded. The inevitable impurities may be unintentionally incorporated from raw materials or the surrounding environment in a general steel manufacturing process, and it may not be possible to exclude them. The inevitable impurities may be understood by those skilled in the technical field of general steel manufacturing. For example, at least one of Ti: 0.01 wt% or less, Mo: 0.01 wt% or less, V: 0.01 wt% or less, Ni: 0.1 wt% or less, Cr: 0.1 wt% or less, and Cu: 0.1 wt% or less may be further included.

The base steel sheet 10 has an ASTM grain size number of 11.3 or more. The ASTM grain size number is an index having a correlation with grain size and is calculated and measured in accordance with the ASTM E112 standard (Standard Test Methods for Determining Average Grain Size) from an image obtained through optical microstructure observation. The ASTM grain size number may be measured for a cross-section including the thickness direction of the base steel sheet 10. More specifically, it may be measured based on the TD plane.

The larger the ASTM grain size number, the smaller the average grain size. If the ASTM grain size number is small, a problem may occur in which the strength excessively increases and the elongation decreases, making forming difficult. More specifically, the ASTM grain size number is in the range of 11.3 to 13.0. More specifically, it is in the range of 11.3 to 12.0.

The base steel sheet 10 may include NbC precipitates, and the average particle size of the NbC precipitates may be 10 nm or less. By including NbC of an appropriate particle size, the strength may be further improved. More specifically, the average particle size of the NbC precipitates may be 1 to 10 nm.

Returning to the description of the Ni plated steel sheet 100 for cans, the Fe-Ni alloy layer 20 is located between the base steel sheet 10 and the Ni plating layer 30. If only the Ni plating layer 30 exists without the Fe-Ni alloy layer 20, adhesion to the base steel sheet 10 is insufficient, which may cause the layer to easily peel off during processing. The Fe-Ni alloy layer 20 is formed through Ni diffusion into the base steel sheet 10 and Fe diffusion into the Ni plating layer 30. In an embodiment of the present invention, the Fe-Ni alloy layer 20 refers to a region between a point where Fe is 5 wt % and a point where Ni is 5 wt % in a thickness direction. A thickness of the Fe-Ni alloy layer 20 may be the distance between the aforementioned points. The thickness of the Fe-Ni alloy layer 20 may be measured through GDS (Glow Discharge Spectrometer) or EDS (Energy Dispersive X-ray Spectrometer) measurement of a cross-section of the Ni plated steel sheet 100 for cans. In the Fe-Ni alloy layer 20, Fe and Ni concentration gradients exist; specifically, Fe may have a concentration gradient in which the concentration increases from a surface of the steel sheet toward a center thereof, and Ni may have a concentration gradient in which the concentration decreases from the surface of the steel sheet toward the center thereof. The Fe-Ni alloy layer 20 may include 35 to 65 wt % of Fe and 35 to 65 wt % of Ni as an average in the thickness direction.

The thickness of the Fe-Ni alloy layer (20) may be 0.5 to 2.5 µm. If the thickness of the Fe-Ni alloy layer (20) is too small, it is difficult to ensure adhesion. If the thickness of the Fe-Ni alloy layer (20) is too large, the Fe components present in the base steel sheet (10) are exposed to the surface, and corrosion resistance may be deteriorated. More specifically, the thickness of the Fe-Ni alloy layer (20) may be 0.6 to 2.4 µm. More specifically, the thickness of the Fe-Ni alloy layer (20) may be 0.7 to 2.3 µm.

The Ni plating layer 30 helps ensure corrosion resistance against battery electrolytes and the atmosphere. The plating thickness may vary depending on the amount of forming and the type of electrolyte, and at least one surface where wear mainly occurs during forming may be plated to a thickness of 2.0 µm or more. In the case of hot-dip plating, it is difficult to control the plating thickness below a certain level and thickness variation tends to be large, so plating may be performed through electroplating.

A Ni plated steel sheet (100) for cans according to an embodiment of the present invention may simultaneously ensure excellent strength, elongation, and in-plane anisotropy. Specifically, the tensile strength is 420.0 MPa or more. More specifically, the tensile strength may be 420.0 to 600.0 MPa. More specifically, the tensile strength may be 425.0 to 550.0 MPa. More specifically, the tensile strength may be 430.0 to 500.0 MPa.

Specifically, the elongation is 20.0 % or more. More specifically, the elongation may be 20.0 % to 30.0 %. More specifically, the elongation may be 20.5 to 28.0 %. More specifically, the elongation may be 21.0 to 25.0 %.

Specifically, the in-plane anisotropy Δr is 0.40 or less. More specifically, the in-plane anisotropy Δr may be 0.01 to 0.40. More specifically, the in-plane anisotropy Δr may be 0.10 to 0.38.

Tensile strength, elongation, and in-plane anisotropy Δr may be measured through a common tensile test at room temperature. The in-plane anisotropy may be obtained through the following Expression 1. $Δ r = \left({r}_{0}+{r}_{90}-2\times {r}_{45}\right) / 2$ (Expression 1) (where r₀, r₄₅, and r₉₀ are the plastic anisotropy coefficients (Lankford values) when tensilely tested in directions forming angles of 0°, 45°, and 90° with the rolling direction, respectively)

A method for manufacturing a Ni-plated steel sheet for cans according to an embodiment of the present invention comprises: manufacturing a hot-rolled steel sheet by hot rolling a slab; manufacturing a cold-rolled steel sheet by cold rolling the hot-rolled steel sheet; recrystallization-annealing the cold-rolled steel sheet; skin-pass rolling the recrystallization-annealed steel sheet; manufacturing a Ni plated steel sheet by Ni plating one or both surfaces of the skin-pass rolled steel sheet; and alloying-annealing the Ni plated steel sheet.

Each step will be described in detail below.

First, a hot-rolled steel sheet is manufactured by hot rolling a slab.

Since the alloy composition of the slab has been described in connection with the aforementioned base steel sheet 10 of the Ni plated steel sheet for cans, redundant descriptions are omitted. Since the alloy components do not substantially change during the manufacturing process of the Ni plated steel sheet for cans, the alloy composition of the slab and the alloy composition of the base steel sheet 10 are substantially the same.

Before manufacturing the hot-rolled steel sheet, the method may further include heating the slab at 1200°C or higher. Since various precipitates generated in the steel during slab manufacture must be re-dissolved, a temperature of 1200°C or higher is required. More specifically, heating may be performed at 1200 to 1350°C.

A hot-rolled steel sheet may be manufactured by coiling a reheated slab at 580 to 720°C after hot finish rolling at a temperature of Ar₃ or higher. The reason for limiting the hot finish rolling temperature to Ar₃ or higher is to perform rolling in the austenite single-phase region. If dual-phase region rolling is performed, rolling stability may decrease due to non-uniformity of the material. The Ar₃ temperature is widely known, and in an embodiment of the present invention, the Ar₃ temperature may be calculated as 910 - (310 × [C]) - (80 × [Mn] ) - (0.35 × (25.4 - 8)). The [C] and [Mn] represent the contents (wt%) of C and Mn in the slab, respectively. More specifically, the hot finish rolling temperature may be 850°C to 1000°C.

When coiling after finish rolling, the precipitation behavior of NbC changes depending on the coiling temperature. If the coiling temperature is too low or too high, NbC is not properly precipitated; therefore, the coiling temperature may be controlled to 580 to 720°C, which is favorable for precipitation. The thickness of the hot-rolled steel sheet may be 2 to 6 mm.

Next, a cold-rolled steel sheet is manufactured by cold rolling the hot-rolled steel sheet. An appropriate level of cold reduction ratio is important in terms of both strength and formability. The higher the reduction ratio, the more facilitated the recrystallization nucleation is during annealing, which refines the grain size and increases strength. In addition, as the reduction ratio increases, the in-plane anisotropy tends to decrease. However, if the reduction ratio is too high, the elongation decreases, which not only adversely affects formability but also increases deformation resistance, thereby reducing productivity. In consideration of this, the cold reduction ratio is set to a range of 70 to 90%. More specifically, the reduction ratio may be 73 to 85%. Scale generated during hot rolling may be removed by adding a pickling process before cold rolling. The thickness of the cold-rolled steel sheet may be 0.3 to 1 mm.

Next, the cold-rolled steel sheet is subjected to recrystallization annealing. The main purpose of the recrystallization annealing is to remove internal stresses formed during cold rolling and to ensure formability. To this end, a process of annealing at a sufficiently high temperature is required so that recrystallization occurs completely. In order to cause recrystallization for a cold-rolled steel sheet having a steel composition according to an embodiment of the present invention, a temperature of 720°C or higher is required in consideration of an increase in the recrystallization temperature caused by NbC. If the temperature is too low, recrystallization is not fully completed and some deformed grains remain, which may cause a significant reduction in the ductility of the steel sheet and cracks during forming due to an increase in strength. However, if the annealing temperature is too high, it is difficult to ensure strength due to grain growth, and fractures or shape defects may be caused due to a reduction in strength during annealing. Therefore, recrystallization annealing of the cold-rolled steel sheet may be performed at a soaking temperature of 720 to 850°C. More specifically, the annealing may be performed at a temperature of 725 to 835°C. The soaking time may be 10 to 120 seconds.

Next, the recrystallization annealed steel plate is subjected to skin-pass rolling.

Skin-pass rolling not only corrects the shape but also plays a role in forming dislocations of an appropriate density. Dislocations formed during the skin-pass rolling process become locations where carbides are easily precipitated in the alloying annealing process performed after plating, thereby contributing to additional strength improvement. To obtain this effect, a reduction ratio of 0.5% or more is required. However, if the reduction ratio is too high, it provides a driving force for surface crystal grains to recrystallize and coarsen in the alloying annealing process, and locally coarse grains cause formability defects such as local fracture due to non-uniform elongation, so it is necessary to perform it at a level of 1.8% or less. More specifically, the reduction ratio may be 0.6 to 1.7 %.

Next, a Ni plated steel sheet is manufactured by Ni plating one or both surfaces of the skin-pass rolled steel sheet. Ni plating is required to ensure corrosion resistance against battery electrolytes and the atmosphere. The plating thickness may vary depending on the amount of forming and the type of electrolyte, and at least one surface where wear mainly occurs during forming may be plated to a thickness of 2.0 µm or more. More specifically, the plating may be performed to a thickness of 2.0 to 5.0 µm. In the case of hot-dip plating, it is difficult to control the plating thickness below a certain level and thickness variation tends to be large, so electroplating may be used. Conditions such as the Ni plating bath and current density during electroplating may be standard conditions, and a detailed description thereof will be omitted.

Next, the Ni-plated steel sheet is subjected to alloying annealing.

A Ni plating layer 30 has poor adhesion to a steel sheet immediately after plating and may easily fall off during processing. To prevent this, it is necessary to form an Fe-Ni alloy layer 20 between the Ni plating layer 30 and the steel sheet by diffusion through alloying annealing at a high temperature.

In this case, the temperature is maintained at a soaking temperature of 600 to 740°C for 5 to 60 seconds. When the alloying annealing temperature is low or the duration is too short, the Fe-Ni alloy layer is thin, making it difficult to ensure adhesion. When the annealing temperature is too high or the duration is too long, the alloy layer is thick and Fe elements included in the steel sheet are exposed to the surface of the plating layer, making it difficult to ensure corrosion resistance. However, the correlation between the alloying annealing temperature and time and the alloy layer thickness is limited to steel sheets manufactured according to the composition and manufacturing conditions described in the present invention and may not hold for steel sheets with different compositions and manufacturing processes. More specifically, the temperature may be maintained at a soaking temperature of 610 to 730°C for 7 to 58 seconds.

After alloying annealing, cold rolling may be additionally performed within a range of 2.0% or less to correct the shape of the steel sheet.

Hereinafter, the present invention will be described in more detail through examples. However, these examples are merely for illustrating the present invention, and the present invention is not limited thereto.

### Example 1

Steel sheets having the compositions of Table 1 below and the manufacturing conditions of Table 2 were manufactured. The components are actual values, and slabs having the corresponding components were manufactured. After reheating the slabs to 1220°C, the slabs were hot rolled to the same thickness of 4 mm at 900°C or higher and then coiled at 640°C to manufacture hot-rolled steel sheets. The coiled hot-rolled steel sheets were cold rolled at the cold reduction ratios of Table 2, then recrystallization annealing was performed at the temperatures of Table 2 for 30 seconds, and skin-pass rolling was performed at the skin-pass reduction ratios of Table 2 to manufacture recrystallization-annealed steel sheets. Ni electroplating was performed to the same thickness of 3.0 µm on the recrystallization-annealed steel sheets, followed by alloying annealing at the temperatures and times of Table 2 for 20 seconds to manufacture final Ni-plated steel sheets.

For each of the manufactured steel sheets, the ASTM grain size number, tensile strength, elongation, in-plane anisotropy, and alloy layer thickness were measured, and the results are shown in Table 3.

The ASTM grain size number was determined in accordance with the ASTM E112 standard (Standard Test Methods for Determining Average Grain Size) based on images obtained through optical microstructure observation.

Tensile strength, elongation, and in-plane anisotropy Δr were measured through a conventional tensile test at room temperature. The in-plane anisotropy may be obtained through the following Expression 1. $Δ r = \left({r}_{0}+{r}_{90}-2\times {r}_{45}\right) / 2$ (Expression 1)

(Where r₀, r₄₅, and r₉₀ are the plastic anisotropy coefficients (Lankford values) when tensilely tested in directions forming angles of 0°, 45°, and 90° with the rolling direction, respectively)

The alloy layer thickness was determined by Glow Discharge Spectrometry (GDS) analysis of a cross-section of the plated steel sheet. The distance from the 5 wt% Fe point to the 5 wt% Ni point was measured.

The adhesion of the plating layer was judged to be good if no peeling of the plating layer from the steel sheet occurred when the material was elongated by 20%, and the corrosion resistance was judged to be good if no surface discoloration occurred when the material was immersed in pure water for 20 minutes and then dried after forming. Test materials for which 20% elongation, an adhesion evaluation condition, was not possible were marked as not measured.

**[Table 1]**

| Classification (wt%) | C | Si | Mn | Al | P | S | N | Nb |
|---|---|---|---|---|---|---|---|---|
| Example 1 | 0.024 | 0.016 | 0.19 | 0.032 | 0.007 | 0.006 | 0.0032 | 0.0227 |
| Example 2 | 0.067 | 0.014 | 0.20 | 0.037 | 0.007 | 0.006 | 0.0031 | 0.0253 |
| Example 3 | 0.049 | 0.015 | 0.20 | 0.035 | 0.006 | 0.006 | 0.0028 | 0.0164 |
| Example 4 | 0.050 | 0.015 | 0.19 | 0.035 | 0.008 | 0.006 | 0.0032 | 0.0368 |
| Example 5 | 0.049 | 0.015 | 0.21 | 0.033 | 0.008 | 0.006 | 0.0029 | 0.0257 |
| Example 6 | 0.051 | 0.015 | 0.21 | 0.037 | 0.006 | 0.006 | 0.0033 | 0.0266 |
| Example 7 | 0.051 | 0.015 | 0.21 | 0.036 | 0.008 | 0.006 | 0.0029 | 0.0266 |
| Example 8 | 0.052 | 0.014 | 0.18 | 0.035 | 0.006 | 0.007 | 0.0032 | 0.0246 |
| Example 9 | 0.049 | 0.016 | 0.22 | 0.036 | 0.007 | 0.006 | 0.0029 | 0.0226 |
| Example 10 | 0.052 | 0.015 | 0.18 | 0.033 | 0.007 | 0.006 | 0.0031 | 0.0242 |
| Example 11 | 0.049 | 0.016 | 0.22 | 0.034 | 0.007 | 0.006 | 0.0030 | 0.0244 |
| Example 12 | 0.048 | 0.014 | 0.22 | 0.038 | 0.007 | 0.006 | 0.0031 | 0.0250 |
| Example 13 | 0.049 | 0.016 | 0.21 | 0.036 | 0.006 | 0.006 | 0.0030 | 0.0238 |
| Example 14 | 0.049 | 0.015 | 0.19 | 0.033 | 0.007 | 0.006 | 0.0032 | 0.0262 |
| Comparative Example 1 | 0.012 | 0.015 | 0.18 | 0.035 | 0.007 | 0.006 | 0.0028 | 0.0270 |
| Comparative Example 2 | 0.076 | 0.014 | 0.19 | 0.036 | 0.008 | 0.006 | 0.0027 | 0.0246 |
| Comparative Example 3 | 0.052 | 0.015 | 0.20 | 0.032 | 0.006 | 0.006 | 0.0028 | 0.0080 |
| Comparative Example 4 | 0.048 | 0.014 | 0.20 | 0.032 | 0.007 | 0.006 | 0.0032 | 0.0456 |
| Comparative Example 5 | 0.051 | 0.016 | 0.20 | 0.032 | 0.007 | 0.007 | 0.0030 | 0.0270 |
| Comparative Example 6 | 0.050 | 0.016 | 0.20 | 0.038 | 0.007 | 0.006 | 0.0030 | 0.0256 |
| Comparative Example 7 | 0.050 | 0.016 | 0.18 | 0.033 | 0.007 | 0.006 | 0.0033 | 0.0235 |
| Comparative Example 8 | 0.051 | 0.015 | 0.21 | 0.033 | 0.008 | 0.006 | 0.0033 | 0.0238 |
| Comparative Example 9 | 0.051 | 0.016 | 0.20 | 0.036 | 0.007 | 0.006 | 0.0031 | 0.0240 |
| Comparative Example 10 | 0.051 | 0.014 | 0.20 | 0.036 | 0.006 | 0.006 | 0.0029 | 0.0267 |
| Comparative Example 11 | 0.051 | 0.016 | 0.20 | 0.037 | 0.006 | 0.006 | 0.0030 | 0.0227 |
| Comparative Example 12 | 0.051 | 0.016 | 0.20 | 0.035 | 0.007 | 0.006 | 0.0028 | 0.0235 |
| Comparative Example 13 | 0.050 | 0.016 | 0.21 | 0.035 | 0.007 | 0.006 | 0.0028 | 0.0228 |
| Comparative Example 14 | 0.048 | 0.016 | 0.22 | 0.038 | 0.007 | 0.006 | 0.0032 | 0.0236 |

**[Table 2]**

| | Cold reduction ratio (%) | Recrystallization annealing Temperature (°C) | Skin-pass reduction ratio (%) | Alloying annealing temperature (°C) | Alloying annealing time (sec) |
|---|---|---|---|---|---|
| Example 1 | 80 | 750 | 1.0 | 670 | 20 |
| Example 2 | 80 | 750 | 1.0 | 670 | 20 |
| Example 3 | 80 | 750 | 1.0 | 670 | 20 |
| Example 4 | 80 | 750 | 1.0 | 670 | 20 |
| Example 5 | 75 | 750 | 1.0 | 670 | 20 |
| Example 6 | 85 | 750 | 1.0 | 670 | 20 |
| Example 7 | 80 | 730 | 1.0 | 670 | 20 |
| Example 8 | 80 | 830 | 1.0 | 670 | 20 |
| Example 9 | 80 | 750 | 0.6 | 670 | 20 |
| Example 10 | 80 | 750 | 1.6 | 670 | 20 |
| Example 11 | 80 | 750 | 1.0 | 620 | 20 |
| Example 12 | 80 | 750 | 1.0 | 720 | 20 |
| Example 13 | 80 | 750 | 1.0 | 670 | 10 |
| Example 14 | 80 | 750 | 1.0 | 670 | 55 |
| Comparativ e Example 1 | 80 | 750 | 1.0 | 670 | 20 |
| Comparativ e Example 2 | 80 | 750 | 1.0 | 670 | 20 |
| Comparativ e Example 3 | 80 | 750 | 1.0 | 670 | 20 |
| Comparativ e Example 4 | 80 | 750 | 1.0 | 670 | 20 |
| Comparativ e Example 5 | 65 | 750 | 1.0 | 670 | 20 |
| Comparativ e Example 6 | 92 | 750 | 1.0 | 670 | 20 |
| Comparativ e Example 7 | 80 | 710 | 1.0 | 670 | 20 |
| Comparativ e Example 8 | 80 | 860 | 1.0 | 670 | 20 |
| Comparativ e Example 9 | 80 | 750 | 0.3 | 670 | 20 |
| Comparativ e Example 10 | 80 | 750 | 1.9 | 670 | 20 |
| Comparativ e Example 11 | 80 | 750 | 1.0 | 580 | 20 |
| Comparativ e Example 12 | 80 | 750 | 1.0 | 760 | 20 |
| Comparativ e Example 13 | 80 | 750 | 1.0 | 670 | 3 |
| Comparativ e Example 14 | 80 | 750 | 1.0 | 670 | 65 |

**[Table 3]**

| Classific ation | ASTM grain size number | Tensile strength (MPa) | Elongati on (%) | In-plane anisotropy (△r) | Alloy layer thickness (*µ*m) | Adhe sion | Corro sion resist ance |
|---|---|---|---|---|---|---|---|
| Exampl e 1 | 11.3 | 433.8 | 22.2 | 0.21 | 1.4 | Good | Good |
| Exampl e 2 | 11.6 | 460.3 | 21.3 | 0.20 | 1.4 | Good | Good |
| Exampl e 3 | 11.4 | 446.8 | 21.8 | 0.20 | 1.6 | Good | Good |
| Exampl e 4 | 11.8 | 486.5 | 22.2 | 0.20 | 1.5 | Good | Good |
| Exampl e 5 | 11.3 | 472.4 | 22.5 | 0.36 | 1.4 | Good | Good |
| Exampl e 6 | 11.5 | 470.8 | 21.5 | 0.13 | 1.6 | Good | Good |
| Exampl e 7 | 11.4 | 456.1 | 22.4 | 0.20 | 1.5 | Good | Good |
| Exampl e 8 | 11.7 | 456.8 | 22.2 | 0.20 | 1.5 | Good | Good |
| Exampl e 9 | 11.4 | 449.5 | 22.4 | 0.20 | 1.6 | Good | Good |
| Exampl e 10 | 11.7 | 454.5 | 22.0 | 0.19 | 1.6 | Good | Good |
| Exampl e 11 | 11.5 | 456.4 | 21.8 | 0.19 | 0.7 | Good | Good |
| Exampl e 12 | 11.4 | 462.0 | 22.5 | 0.20 | 2.3 | Good | Good |
| Exampl e 13 | 11.3 | 453.0 | 21.9 | 0.20 | 0.8 | Good | Good |
| Exampl e 14 | 11.5 | 472.5 | 21.5 | 0.20 | 2.4 | Good | Good |
| Compar ative Exampl e 1 | 11.1 | 415.5 | 23.9 | 0.20 | 1.6 | Good | Good |
| Compar ative Exampl e 2 | 11.7 | 480.6 | 19.5 | 0.20 | 1.4 | Not meas ured | Good |
| Compar ative Exampl e 3 | 10.9 | 400.6 | 25.1 | 0.20 | 1.4 | Good | Good |
| Compar ative Exampl e 4 | 12.1 | 536.5 | 18.4 | 0.20 | 1.4 | Not meas ured | Good |
| Compar ative Exampl e 5 | 11.0 | 405.6 | 24.6 | 0.43 | 1.4 | Good | Good |
| Compar ative Exampl e 6 | 12.2 | 525.0 | 19.5 | 0.18 | 1.4 | Not meas ured | Good |
| Compar ative Exampl e 7 | - | 586.4 | 9.8 | - | 1.5 | Not meas ured | Good |
| Compar ative Exampl e 8 | 11.1 | 416.5 | 23.5 | 0.19 | 1.6 | Good | Good |
| Compar ative Exampl e 9 | 11.4 | 399.3 | 24.6 | 0.20 | 1.4 | Good | Good |
| Compar ative Exampl e 10 | 11.3 | 458.3 | 18.6 | 0.20 | 1.5 | Not meas ured | Good |
| Compar ative Exampl e 11 | 11.5 | 459.6 | 22.5 | 0.20 | 0.4 | Poor | Good |
| Compar ative Exampl e 12 | 11.5 | 456.3 | 22.2 | 0.20 | 2.9 | Good | Poor |
| Compar ative Exampl e 13 | 11.4 | 461.0 | 21.7 | 0.20 | 0.3 | Poor | Good |
| Compar ative Exampl e 14 | 11.5 | 463.5 | 21.5 | 0.20 | 2.7 | Good | Poor |

As shown in Tables 1 to 3, Examples 1 to 14 satisfied both the steel composition and the manufacturing conditions, and it was confirmed that tensile strength, elongation, and in-plane anisotropy were all excellent. In addition, it was confirmed that the Fe-Ni alloy layer was formed to an appropriate thickness, and thus adhesion and corrosion resistance were also excellent.

Comparative Example 1 represents a case where the C content is low, and since the C content was low, sufficient strength was not ensured. In addition, because the C content was low, grains were formed with an ASTM grain size number of 11.1, and a low tensile strength of less than 420 MPa was exhibited. Conversely, Comparative Example 2 represents a case where the C content exceeds the range, and although small grains were formed and a sufficiently high tensile strength was obtained, the elongation was low, resulting in poor formability.

Comparative Example 3 represents a case in which the Nb content was low, and the Nb content was insufficient to form a sufficient amount of NbC. As a result, coarse grains were formed and the tensile strength was low. Comparative Example 4 represents a case in which the Nb content was high; while the grain size was small and the tensile strength was excellent, the elongation was low. In addition, NbC was excessively precipitated, resulting in high deformation resistance during hot rolling, which led to poor hot rolling productivity.

Comparative Example 5 had a low cold reduction ratio, resulting in the formation of large grains and low tensile strength. In addition, the in-plane anisotropy Δr was significantly inferior. As in Comparative Example 6, when the cold reduction ratio is excessively high, the elongation decreases, and it may be confirmed that this also reduces formability.

In Comparative Example 7, recrystallization did not properly occur because the recrystallization annealing temperature was low. Accordingly, the elongation was low and the formability was significantly reduced. In the case of Comparative Example 8, where the recrystallization annealing temperature was too high, a problem occurred in which the grains were coarse and the tensile strength was low.

Comparative Example 9 is a case in which the skin pass reduction ratio was very low, resulting in low tensile strength. As in Comparative Example 10, when the skin pass reduction ratio was excessively high, problems such as decreased elongation and coarsening of surface crystal grains occurred.

Comparative Example 11 is a case where the alloying annealing temperature was low and Comparative Example 13 is a case where the alloying time was short, and in both cases, the Fe-Ni alloy layer was formed to be thin. In both cases, the bonding strength between the steel sheet and the plating layer was low, so a problem occurred in which the plating layer peeled off during battery can forming. Comparative Example 12 is a case where the alloying annealing temperature was high and Comparative Example 14 is a case where the alloying annealing time was long, and in both cases, the Fe-Ni alloy layer was formed to be thick. As a result, Fe was exposed at the surface, and there was a problem in which rust easily occurred after water washing and drying.

The present invention is not limited to the embodiments but may be manufactured in various different forms, and those of ordinary skill in the art to which the present invention belongs will understand that the present invention may be implemented in other specific forms without changing the technical spirit or essential features of the present invention. Therefore, the embodiments described above should be understood as illustrative in all respects and not restrictive.

### [Description of symbols]

100: Ni plated steel sheet
10: Base steel sheet
20: Fe-Ni alloy layer
30: Ni plating layer

## Claims

1. A Ni plated steel sheet for cans, comprising a base steel sheet, a Ni plating layer located on one or both surfaces of the base steel sheet, and an Fe-Ni alloy layer located between the base steel sheet and the Ni plating layer,
wherein the base steel sheet comprises, by weight%, 0.02 to 0.07% of C, 0.1 to 0.4% of Mn, 0.01 to 0.06% of Al, 0.01 to 0.04% of Nb, and the balance of Fe and other inevitable impurities,
wherein an ASTM grain size number is 11.3 or more,
wherein tensile strength is 420 MPa or more,
wherein an elongation is 20% or more,
wherein an in-plane anisotropy Δr is 0.4 or less, and
wherein a thickness of the Fe-Ni alloy layer is 0.5 to 2.5 µm.

2. The Ni plated steel sheet for cans of claim 1,
wherein the base steel sheet further comprises at least one of Si: 0.05 wt % or less, P: 0.015 wt % or less, S: 0.015 wt % or less, and N: 0.006 wt % or less.

3. The Ni plated steel sheet for cans of claim 1,
wherein the base steel sheet further comprises at least one of Ti: 0.01 wt % or less, Ni: 0.1 wt % or less, Cr: 0.1 wt % or less, Cu: 0.1 wt % or less, Mo: 0.01 wt % or less, and V: 0.01 wt % or less.

4. The Ni plated steel sheet for cans of claim 1,
wherein the base steel sheet comprises NbC precipitates, and the average particle size of the NbC precipitates is 10 nm or less.

5. A method of manufacturing a Ni plated steel sheet for cans, comprising the steps of:
manufacturing a hot-rolled steel sheet by hot rolling a slab comprising, by weight %, 0.02 to 0.07% of C, 0.1 to 0.4% of Mn, 0.01 to 0.06% of Al, 0.01 to 0.04% of Nb, and the balance of Fe and other inevitable impurities;
manufacturing a cold-rolled steel sheet by cold rolling the hot-rolled steel sheet at a reduction ratio of 70 to 90%;
recrystallization annealing the cold-rolled steel sheet at a soaking temperature of 720 to 850°C;
skin-pass rolling the recrystallization-annealed steel sheet at a reduction ratio of 0.5 to 1.8%;
manufacturing a Ni plated steel sheet by Ni plating one or both surfaces of the skin-pass rolled steel sheet; and
alloying annealing the Ni plated steel sheet by maintaining the Ni plated steel sheet at a soaking temperature of 600 to 740°C for 5 to 60 seconds.

6. The method of manufacturing the Ni plated steel sheet for cans of claim 5,
wherein the slab further comprises at least one of Si: 0.05 wt % or less, P: 0.015 wt % or less, S: 0.015 wt % or less, and N: 0.006 wt % or less.

7. The method of manufacturing the Ni plated steel sheet for cans of claim 5,
wherein the slab further comprise at least one of Ti: 0.01 wt% or less, Ni: 0.1 wt% or less, Cr: 0.1 wt% or less, Cu: 0.1 wt% or less, Mo: 0.01 wt% or less, and V: 0.01 wt% or less.

8. The method of manufacturing the Ni plated steel sheet for cans of claim 5,
further comprising heating the slab at 1200°C or higher, before manufacturing the hot-rolled steel sheet.

9. The method of manufacturing the Ni plated steel sheet for cans of claim 5,
wherein in the manufacturing of the hot-rolled steel sheet, after hot finish rolling at Ar₃ or higher, coiling is performed at a temperature of 580 to 720°C
